# EUROPÄISCHE PATENTSCHRIFT

(11) **EP 1 612 081 B1**
(45) Veröffentlichungstag und Bekanntmachung des Hinweises auf die Patenterteilung: **01.09.2010**
(21) Anmeldenummer: 05009553.8
(22) Anmeldetag: 30.04.2005
(51) Int. Cl.: B60K 28/08, B60K 28/16, B60T 8/32, B60T 7/20, B60T 8/24

(54) **Verfahren und Vorrichtung zum Betreiben eines Kraftfahrzeuges mit einer Anhängekupplung**
Method and device for operating a motor vehicle with a tow bar
Procédé et dispositif de fonctionnement d'un véhicule à moteur avec un attelage de remorque

(30) Priorität: 30.06.2004 DE 102004031467
(43) Veröffentlichungstag der Anmeldung: 04.01.2006
(73) Patentinhaber: WESTFALIA - Automotive GmbH, 33378 Rheda-Wiedenbrück (DE)
(72) Erfinder: Reul, Thomas, 48317 Drensteinfurt (DE)
(74) Vertreter: Grosse, Wolf-Dietrich Rüdiger

(56) Entgegenhaltungen:
- DE-A1- 4 405 709
- US-A- 4 113 041
- US-B1- 6 705 684
- PATENT ABSTRACTS OF JAPAN Bd. 018, Nr. 589 (M-1701), 10. November 1994 (1994-11-10) -& JP 06 219348 A (MAZDA MOTOR CORP), 9. August 1994 (1994-08-09)

## Beschreibung

Die Erfindung betrifft ein Verfahren zum Betreiben eines Kraftfahrzeuges mit einer Anhängekupplung, die heckseitig an einem Träger angeordnet ist und eine Kugelstange mit einem Kugelkopf aufweist, wobei die von einer gezogenen Anhängelast auf die Anhängekupplung ausgeübten Kräfte ermittelf und an eine Steuerungs- und/oder Regelungseinrichtung des Zugfahrzeugs übermittelt werden, wie beispielsweise durch die US 6.705.684 B 1 oder die DE 44 05 709 A 1 bekannt geworden.

Derartige Anhängeeinrichtungen sind als an einem Trägerrahmen eines Kraftfahrzeuges starr, abnehmbar oder verschwenkbar angeordnete Anhängekupplungen bekannt. Die schwenkbaren Anhängekupplungen weisen dabei in der Regel eine axial verschieblich gelagerte Kugelstange auf, die sowohl in ihrer Ruhelage als auch in ihrer Betriebslage über in Eingriff bringbare Formschlusskonturen einerseits eines Kugelstangenlagerkopfes und andererseits eines diesem gegenüberliegenden Bauteils drehfest festlegbar ist.

Bei einer durch die DE 198 59 961 A1 bekannt gewordenen Anhängekupplung ist die fahrzeugfest angeordnete, schwenkbar sowie axial verschieblich gelagerte Kugelstange sowohl in ihrer Ruhelage als auch in ihrer Betriebslage über in Eingriff bringbare Formschlusskonturen einerseits des Kugelstangenlagerkopfes und andererseits eines diesem gegenüberliegenden Bauteils in Form eines Anbauflansches drehfest festlegbar. Die Kugelstange wird sowohl in der Ruhelage, in welcher sich die Kugelstange in etwa quer zur Fahrzeuglängsrichtung unter dem Stoßfänger bzw. der Heckschürze befindet, als auch in der Betriebslage, in welcher sich die Kugelstange im wesentlichen in Fahrzeuglängsrichtung befindet, mittels der Formschlussverbindungen drehfest festgelegt. Die Formschlußverbindungen, hier bestehend aus einer Verzahnung sowie einer Gegenverzahnung, greifen in den Drehendstellungen des Kugelstangenlagerkopfes ineinander.

Weiterhin sind schwenkbare Anhängekupplungen bekannt, die zum Festlegen und Freigeben der Kugelstange eine Verriegelung aufweisen, die einen gegen ein anstehendes Kraftelement, insbesondere eine Druckfeder, über ein von außen betätigbares Druck- oder Zugmittel zurückstellbaren Sperrbolzen besitzt, dem radial ein- und ausrückbare Rastmittel, insbesondere Kugeln, zugeordnet sind, wie aus der DE-U 94 08 478.5 bekannt. Das Vorspannen der Druckfeder erfolgt hierbei mittels eines Handrades, über das eine Zahnstange einen Bowdenzug als Verbindung zum Sperrbolzen betätigt wird.

Eine durch die EP-A-0 799 732 bekannt gewordene Anhängekupplung weist für die Bewegung der Kugelstange nur eine einzige, schräg ausgerichtete Schwenkachse auf. Diese erfordert wegen der räumlichen Schräglage der Schwenkachse einen großen Bauraum und zudem auch einen großen freien Bewegungsraum, der bei vielen Fahrzeugen nicht zur Verfügung steht. Aus der WO-A1-03/072 375 ist eine Anhängekupplung mit einem mechanischen Bewegungsantrieb bekannt, bei der die Kugelstange um zwei im rechten Winkel zueinander ausgerichtete rotatorische Achsen beweglich gelagert ist.

Während des Fahrbetriebs mit den vorstehend genannten Anhängekupplungen kann es in der Praxis unter der Anhängelast einerseits vorkommen, dass beispielsweise durch nicht angepasste Geschwindigkeit oder falsche Beladung eines Anhängers dieser ins Schlingern gerät. Andererseits können die Belastungsgrenzen eines Zugfahrzeuges, insbesondere hierbei Belastungsgrenzen von Motor und Getriebe, überschritten werden, wenn die Zugkräfte an der Anhängekupplung so hoch werden, dass sie außerhalb ihrer Spezifikationen arbeitet

Aus der eingangs genannten US 6.705.684 B 1 gemäß den Oberbegriff des Anspruchs 1, ist es deshalb bekannt, ein Anhänger-Bremskontrollsystem mit ggf. individueller Einwirkung auf, jede einzelne Bremse des Anhängers vorzusehen. Der eingangs ebenfalls schon genannten DE 44 05 709 A 1 läßt sich entnehmen, daß das Verhältnis der aktiv gesteuerten Bremskräfte am Zugfahrzeug und am Anhänger variiert werden kann. Hiermit soll erreicht werden, daß über den Bremseneingriff eine Regelung der Koppelkraft, z. B. Deichselkraft im Falle eines Anhängers, auf einen festen Wert oder auf einen vorgegebenen Wert erfolgt.

Durch die US 4.113.041 A ist ein System bekannt geworden, das ein Bremsen sowohl des Zugfahrzeugs als auch des Anhängers, hier ein Flugzeug, gegenseitig bewirken kann. Es wird außerdem die Lehre vermittelt; die Zugverbindung bei Überlastung bzw. -beanspruchung zu trennen.

Die JP 6-219348 A sieht vor, daß Sensoren das Antriebssystem der einzelnen Räder eines Anhängers steuern.

Der Erfindung liegt die Aufgabe zugrunde, ein Verfahren der eingangs genannten Art zu schaffen, mit dem sich die beschriebenen Nachteile vermeiden lassen und das eine höhere Betriebssicherheit ermöglicht, insbesondere bei einer drohenden Instabilität des Anhängers das Zugfahrzeug frühzeitig stabilisiert und somit ein gesamtes Ausbrechen des Gespanns bereits im Ansatz wirkungsvoll verhindert.

Diese Aufgabe wird erfindungsgemäß dadurch gelöst, daß die ermittelten und zum Zugfahrzeug übermittelten Kraftdaten ausschließlich zur Regelung am Zugfahrzeug verwendet werden und daß in Querrichtung auf die Anhängekupplung wirkende Kräfte ermittelt und an eine Steuerungs- und/oder Regelungseinrichtung für ein Elektronisches-Stabilitäts-Programm (ESP) des Zugfahrzeugs übermitteit werden.

Der Erfindung liegt hierbei die Überlegung zugrunde, Informationen über die zusätzlich zum Fahrzeuggewicht angekoppelte Anhängelast, dynamisch oder auch statisch, zu ermitteln und die Informationen an entsprechende Management-Einrichtungen ausschließlich des Zugfahrzeugs weiter zu leiten, um für den Antrieb, das Fahrwerk und die Bremsen, somit für das gesamte Betriebsverhalten, relevante Steuerungs- bzw. Regelungsparameter zu beeinflussen. Die an der Anhängekupplung mittels Krafterfassungsmitteln gemessenen mechanischen Belastungen können hierbei über eine Signale verarbeitende Einrichtung ausgewertet und weitergeleitet oder als sogenannte Rohdaten dem Fahrzeugmanagement direkt zur Verfügung gestellt werden. Die in Querrichtung auf die Anhängekupplung wirkenden Kräfte werden ermittelt und an eine Steuerungs- und/oder Regelungseinrichtung für ein Elektronisches-Stabilitäts-Programm (ESP) des Zugfahrzeugs übermittelt. Die beispielsweise bei einer drohenden Instabilität eines Wohnanhängers auftretenden Querkräfte, man spricht hier auch von einem Giermoment, fließen als Meß- bzw. Regelwert in den Steuerungs- und Regelkreis des Fahrzeugs-ESP ein, welches dann durch gezielte Bremseingriffe das Zugfahrzeug frühzeitig stabilisiert und somit ein gesamtes Ausbrechen des Gespanns bereits im Ansatz wirkungsvoll verhindert.

Durch das erfindungsgemäße Verfahren kann das Brems- und Fahrverhalten, insbesondere in kritischen Fahrsituationen bei Fehl-, Angst- oder Panikreaktionen des Fahrers, in der Art beeinflusst werden, dass die von dem Sensor erfaßten Querkräfte als Steuer bzw. Regelgrößen dem ESP 15 zur Fahrdynamikregelung, übermittelt werden.

Eine bevorzugte Ausgestaltung des efiindüngsgemäßen Verfahrens sieht vor, dass in Zugrichtung auf die Anhängekupplung wirkende (X)-Kräfte ermittelt und an eine Steuerungs- und/oder Regelungseinrichtung für ein Motor- und/oder Getriebemanagement übermittelt werden. In Abhängigkeit der auftretenden Zugkräfte kann die Motor- und/oder Getriebeelektronik des Zugfahrzeuges dann so beeinflusst werden, dass die Drehmomentcharakteristik an die gesamte vorliegende Fahrzeugmasse angepasst wird, wobei sich das maximale zur Verfügung stehende Drehmoment nicht nur über die statische Anhängelast, sondern auch über die dynamisch aufgenommenen Kraftwerte variieren lässt. Es kann somit insbesondere bei erhöhter Leistungsanforderung des Zugfahrzeuges, z. B. im Gebirge bzw. bei Anstiegen, eine effiziente Anpassung der Motordrehzahlen in Verbindung mit den Schaltpunkten der Getriebeautomatik vorgenommen werden.

Weiterhin kann unter Zuhilfenahme der dynamisch ermittelten Kraftwerte das Motormanagement dahingehend angepasst werden, dass die Höchstgeschwindigkeit des Zugfahrzeugs bei Erreichen einer maximalen Fahrzeugbelastung elektronisch begrenzt bzw. abgeregelt wird. Beim Überschreiten der Belastungsgrenzen der Anhängekupplung kann hierbei parallel zum Eingriff in das Motor- bzw. Getriebemanagement eine akustische und/oder visuelle Warneinrichtung aktiviert werden.

Des weiteren ist erfindungsgemäß vorgesehen, dass die in Zugrichtung auf die Anhängekupplung wirkenden (X)-Kräfte ermittelt und an eine Steuerungs- und/oder Regelungseinrichtung für eine Pneumatik- bzw. Hydrofederung des Zugfahrzeugs übermittelt werden. Geänderte Belastungszustände an der Anhängekupplung werden hierbei sofort erfasst, und über die Steuerungselektronik wird sogleich das Dämpfungs- bzw. Federungsverhalten des Zugfahrzeugs daran angepasst. Insbesondere auch hohe Beladungszustände, beispielsweise eines Wohnanhängers, werden hierbei erfasst und signaltechnisch übermittelt, so dass über das variable Federungs- und Dämpfungssystem eine dem Beladungszustand entsprechende Niveauregulierung des Zugfahrzeugs erfolgen kann.

Wenn in bevorzugter Ausführung des Verfahrens die in Zug- und Querrichtung auf die Anhängekupplung wirkenden Kräfte ermittelt und an eine Steuerungs- und/oder Regelungseinrichtung für ein Anti-Blockier-System (ABS) und/oder für ein System zur Elektronischen-Bremskraft-Verteilung (EBV) übermittelt werden, lässt sich neben der Beeinflussung des Antriebsverhaltens des Zugfahrzeugs in Bezug auf die dynamisch ermittelten Belastungen der Anhängekupplung auch das Bremsverhalten über die entsprechenden Steuerungs- und Regelungskreise in der Art beeinflussen, dass die Bremskraftverteilung anders gesteuert - hierbei erfolgt eine maximale Bremsleistung an Hinter- und Vorderachse, ohne dass die Hinterräder dabei "überbremst" werden - oder aber die Frequenz des Anti-Blockier-Systems, also ein Regeleingriff häufiger pro Sekunde erfolgt, verändert wird.

Als Krafterfassungsmittel kommt vorzugsweise ein lastsensitiver Sensor zum Einsatz, wobei zur sicheren Erfassung aller möglichen auf die Anhängekupplung wirkenden Zug- und Querkräfte sowohl am mit dem Zugfahrzeug verbundenen Querträger der Anhängevorrichtung als auch an der Kugelstange der Kupplung selbst jeweils ein Sensor angeordnet werden kann. Die über den/die Sensoren ermittelten statischen und/oder dynamischen Belastungen der Anhängekupplung können einerseits mittels eines separaten Steuergeräts ausgewertet oder andererseits als Rohdaten der entsprechenden Steuerungs- und/oder Regelungseinrichtung des Zugfahrzeugs direkt zur Verfügung gestellt werden.

Gleichermaßen lassen sich alternativ oder ergänzend zu den vorbeschriebenen Maßnahmen vertikale Kräfte (Z-Richtung) berücksichtigen und in die Steuerung und / oder Regelung einbeziehen. Denn hohe positive (Kraft von oben nach unten) oder negative (Kraft von unten nach oben) Stützlasten, die durch eine unsachgemäße bzw. fehlerhafte Be- und Ausladung eines Anhängers entstehen, beeinflussen ebenfalls das Fahrverhalten nachteilig, besonders im Bereich der Federung.

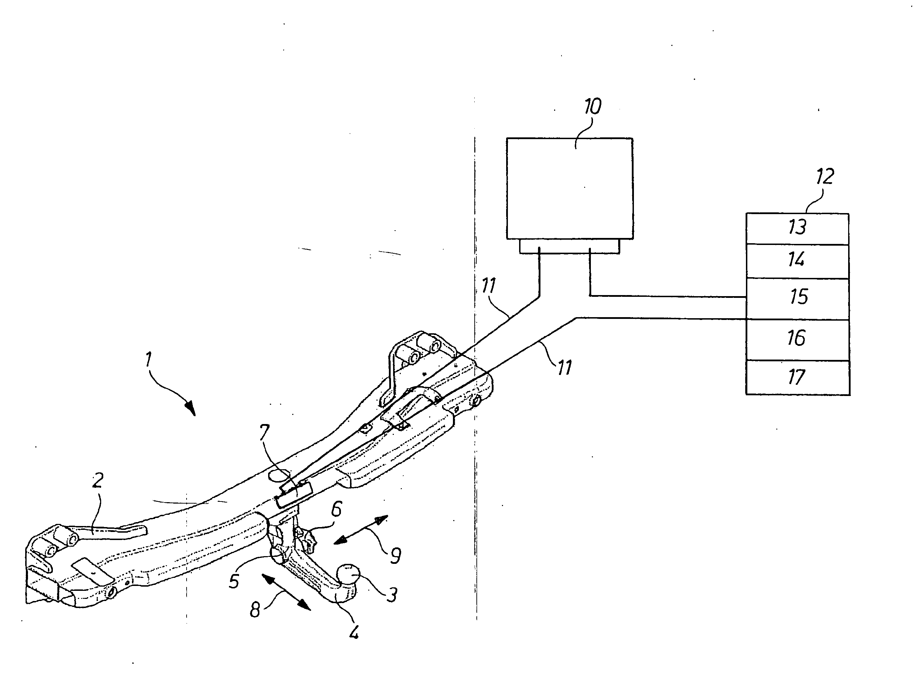

Weitere Merkmale und Einzelheiten der Erfindung ergeben sich aus den Ansprüchen und der nachfolgenden Beschreibung eines in der einzigen Zeichnung als perspektivische Gesamtansicht auf einen Träger mit Anhängekupplung, die hier mit einer abnehmbaren Kugelstange ausgebildet ist, schematisch dargestellten Ausführungsbeispiels der Erfindung.

Eine in der Zeichnungsfigur dargestellte Anhängekupplung 1 ist über einen ein- oder mehrteiligen Querträger 2 heckseitig an einem Fahrzeug (nicht dargestellt) befestigt. Die Anhängekupplung 1 umfaßt im Ausführungsbeispiel eine gekröpfte, an ihrem freien Ende eine Kupplungskugel 3 tragende, abnehmbare Kugelstange 4, die über ein Aufnahmerohr 5 am Querträger 2 angeordnet ist. In der dargestellten Betriebslage ist die Kugelstange 4 positionsicher verriegelt. Zum Entriegeln und damit Freigeben der Kugelstange 4, um diese vom Fahrzeug abnehmen zu können, ist seitlich an der Anhängekupplung 1 eine Handgriffbetätigung 6 vorgesehen.

Am Querträger 2 ist ein lastsensitiver Sensor 7 angeordnet, der von einer gezogenen Anhängelast auf die Anhängekupplung 1 ausgeübte Zugkräfte 8 und Querkräfte 9 ermittelt. Es liegt hierbei im Rahmen der Ausgestaltungsmöglichkeiten, dass zur sicheren Erfassung der auf die Anhängekupplung 1 übertragenen Zug- und Querkräfte 8, 9 zusätzlich zu dem Sensor 7 weitere Sensoren an der Kugelstange 4 bzw. im Bereich der Kupplungskugel 3 vorgesehen werden.

Die über den Sensor 7 erfaßten Zug- und Querkräfte 8, 9 und/oder Vertikalkräfte, insbesondere statische und dynamische Belastungen an der Anhängekupplung 1, können einerseits in einem Steuergerät 10 ausgewertet oder signaltechnisch umgewandelt und anschließend als "aufbereitete" Signal-Daten über ein Fahrzeugbussystem 11 einem Fahrzeug- bzw. Motormanagement 12 des Zugfahrzeugs zur Verfügung gestellt werden. Andererseits können die aus den mechanischen Belastungen an der Anhängekupplung 1 her resultierenden Signal-Daten von dem Sensor 7 als analoges Signal oder aber als schon aufbereitetes Signal direkt in das mit dem Fahrzeug-Management 12 verbundene Fahrzeugbussystem 11 eingespeist werden.

Das sehr schematisch dargestellte Fahrzeug- bzw. Motormanagement 12 umfasst Steuerungs- und Regelungseinrichtungen für eine Motor- und Getriebeelektronik 13, eine Pneumatik- bzw. Hydrofederung 14, ein Elektronisches-Stabilitäts-Programm (ESP) 15, ein Anti-Blockier-System (ABS) 16 und eine Elektronische-Bremskraft-Verteilung (EBV) 17. Die über den Sensor 7 aus den auf die Anhängekupplung 1 einwirkenden Zugkräfte 8 gewonnenen Signal-Daten fließen als Steuer- bzw. Regelgröße mit in die Motor- und Getriebeelektronik ein, wobei diese dann beispielsweise eine auf die gesamte Fahrzeugmasse - Zugfahrzeug mit Wohnanhänger oder dgl. - angepasste Änderung der Drehmomentcharakteristik des Motors vornimmt. Weiterhin werden die aus den Zugkräften 8 gewonnenen Signaldaten in den Steuerungs- oder Regelkreis der Pneumatik- bzw. Hydrofederung 14 eingespeist, um somit die Luft- oder Hydrofederung des Zugfahrzeugs an geänderte Belastungen anzupassen, insbesondere eine Niveauregulierung vorzunehmen.

Neben der Beeinflussung des Antriebs- bzw. Federungsverhaltens des Zugfahrzeugs in Bezug auf die dynamisch ermittelten Belastungen der Anhängekupplung kann auch das Brems- und Fahrverhalten, insbesondere in kritischen Fahrsituationen bei Fehl-, Angst- oder Panikreaktionen des Fahrers, in der Art beeinflusst werden, dass die von dem Sensor 7 erfaßten Zug- und Querkräfte 8, 9 und/oder Vertikalkräfte als Steuer- bzw. Regelgrößen dem ESP 15 zur Fahrdynamikregelung, dem ABS 16 zur Frequenzänderung des Regeleingriffs und dem EBV 17 für eine maximale Bremsleistung an Hinter- und Vorderachse übermittelt werden

## Patentansprüche

1. Verfahren zum Betreiben eines Kraftfahrzeuges mit einer Anhängekupplung (1), die heckseitig an einem Träger (2) angeordnet ist und eine Kugelstange (4) mit einem Kugelkopf (3) aufweist, wobei die von einer gezogenen Anhängelast auf die Anhängekupplung (1) ausgeübten Kräfte (8, 9) ermittelt und an eine Steuerungs- und/oder Regelungseinrichtung (10,12,13,14,15,16,17) des Zugfahrzeugs übermittelt werden
**dadurch gekennzeichnet,**
**daß** die ermittelten und zum Zugfahrzeug übermittelten Kraftdaten ausschließlich zur Regelung am Zugfahrzeug verwendet werden und daß in Querrichtung auf die Anhängekupplung (1) wirkende Kräfte (9) ermittelt und an eine Steuerungs- und/oder Regelungseinrichtung für ein Etektronisches-Stabilitäts-Programm (ESP) (15) des Zugfahrzeugs übermittelt werden.

2. Verfahren nach Anspruch 1,
**dadurch gekennzeichnet,**
**daß** in Zugrichtung auf die Anhängekupplung (1) wirkende (X)-Kräfte (8) ermittelt und an eine Steuerungs- und/oder Regelungseinrichtung für ein Motor- und/oder Getriebemanagement (13) übermittelt werden.

3. Verfahren nach Anspruch 1 oder 2,
**dadurch gekennzeichnet,**
**dass** die in Zugrichtung auf die Anhängekupplung (1) wirkenden (X)-Kräfte (8) ermittelt und an eine Steuerungs- und/oder Regelungseinrichtung für eine Pneumatik- bzw. Hydrofederung (14) des Zugfahrzeugs übermittelt werden.

4. Verfahren nach einem der Ansprüche 1 bis 3,
**dadurch gekennzeichnet,**
**daß** die in Zug- und Querrichtung auf die Anhängekupplung (1) wirkenden Kräfte (8, 9) ermittelt und an eine Steuerungs- und/oder Regelungseinrichtun für ein Anti-Blockier-System (ABS) (16) und/oder ein System zur Elektronischen-Bremskraft-Verteitung (EBV) (17) übermittelt werden.

## Claims

1. A method for operating a motor vehicle with a tow bar coupling (1), which at the rear is arranged on a member (2) and comprises a ball rod (4) with a ball head (3), wherein the forces (8, 9) exerted by a pulled trailing load on the tow bar coupling (1) are determined and transmitted to a control and/or regulating device (10, 12, 13, 14, 15, 16, 17) of the towing vehicle, **characterized in that** the force data determined and transmitted to the towing vehicle are exclusively used for regulation on the towing vehicle and that forces (9) acting on the tow bar coupling (1) in transverse direction are determined and transmitted to a control and/or regulating device for an electronic stability program (ESP) (15) of the towing vehicle.

2. The method according to Claim 1, **characterized in that** (X)-forces (8) acting on the tow bar coupling (1) in towing direction are determined and transmitted to a control and/or regulating device for an engine and/or transmission management (13).

3. The method according to Claim 1 or 2, **characterized in that** the (X)-forces (8) acting on the tow bar coupling (1) in towing direction are determined and transmitted to a control and/or regulating device for a pneumatic or hydraulic suspension (14) of the towing vehicle.

4. The method according to any one of the Claims 1 to 3, **characterized in that** forces (8, 9) acting on the tow bar coupling (1) in towing and transverse directions are determined and transmitted to a control and/or regulating device for an anti-lock braking system (ABS) (16) and/or a system for electronic brake force distribution (EBD) (17).

## Revendications

1. Procédé pour utiliser un véhicule avec un dispositif d'attelage (1), qui est disposé côté arrière sur un support (2) et présente une barre à boule (4) avec boule (3), les forces (8, 9) exercées par une charge remorquée tirée sur le dispositif d'attelage (1) étant déterminées et transmises à un dispositif de commande et/ou de réglage (10, 12, 13, 14, 15, 16, 17) du véhicule tracteur,
**caractérisé en ce que**
les données de force déterminées et transmises au véhicule tracteur sont utilisées exclusivement pour le réglage sur le véhicule tracteur et **en ce que** des forces (9) agissant dans le sens transversal sur le dispositif d'attelage (1) sont déterminées et transmises à un dispositif de commande et/ou de réglage pour un programme de stabilité électronique (ESP) (15) du véhicule tracteur.

2. Procédé selon la revendication 1, **caractérisé en ce que**
des forces (X) (8) agissant dans le sens de traction sur le dispositif d'attelage (1) sont déterminées et transmises à un dispositif de commande et/ou de réglage pour une gestion du moteur et/ou de la boîte de vitesses (13).

3. Procédé selon la revendication 1 ou 2, **caractérisé en ce que**
les forces (X) (8) agissant dans le sens de traction sur le dispositif d'attelage (1) sont déterminées et transmises à un dispositif de commande et/ou de réglage pour une suspension pneumatique ou hydraulique (14) du véhicule tracteur.

4. Procédé selon l'une quelconque des revendications 1 à 3,
**caractérisé en ce que**
les forces (8, 9) agissant dans le sens de traction et le sens transversal sur le dispositif d'attelage (1) sont déterminées et transmises à un dispositif de commande et/ou de réglage pour un système antiblocage (ABS) (16) et/ou un système pour la répartition électronique de l'effet de freinage (EBV) (17).
